# EUROPÄISCHE PATENTSCHRIFT

(11) **EP 2 025 649 B1**
(45) Veröffentlichungstag und Bekanntmachung des Hinweises auf die Patenterteilung: **14.10.2020**
(21) Anmeldenummer: 08104748.2
(22) Anmeldetag: 15.07.2008
(51) Int. Cl.: C03C 17/00, C03C 17/02, C03C 17/04, C03C 17/23, C03C 17/25, C03C 17/34

(54) **Backofen**
Oven
Four

(30) Priorität: 25.07.2007 DE 102007034683
(43) Veröffentlichungstag der Anmeldung: 18.02.2009
(73) Patentinhaber: BSH Hausgeräte GmbH, 81739 München (DE)
(72) Erfinder: Jördens, Frank, 83278, Traunstein (DE); Salomon, Jürgen, 83308, Trostberg (DE); Schmidmayer, Gerhard, 83093, Bad Endorf (DE)
(74) Vertreter: Daub, Thomas

(56) Entgegenhaltungen:
- EP-A- 0 923 988
- EP-A- 1 157 742
- WO-A-97/25146
- WO-A1-03/035774
- WO-A2-03/027348
- DE-A1- 19 831 610
- DE-A1-102004 053 706
- DE-U1- 20 021 904
- JP-A- 5 253 544
- JP-A- 7 232 080
- US-A- 6 093 676
- US-A1- 2003 215 647
- US-A1- 2005 049 158
- US-B1- 6 440 569

## Beschreibung

Die Erfindung geht aus von einem Backofen nach dem Oberbegriff des Anspruchs 1.

Aus der DE 200 21 904 U1 ist ein Backofen mit einem Schichtkörper bekannt, welcher eine photokatalytisch aktivierbare Oberflächenschicht auf einem Grundkörper umfasst. Die deutschen Patentanmeldungen DE 198 31 610 A1 und DE 10 2004 053 706 A1 zeigen Haftvermittlungsschichten zu einer Befestigung von photokatalytischen Filmen auf einem Grundkörper.

Die Aufgabe der Erfindung besteht insbesondere darin, eine gattungsgemäße Vorrichtung mit verbesserten Eigenschaften hinsichtlich einer Reinigungswirkung bereitzustellen.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einem Backofen, der eine pyrolytische Reinigungsfunktion aufweist, mit einem Schichtkörper, insbesondere einem Hausgeräteschichtkörper, mit einem Grundkörper und einer Reinigungsschicht.

Erfindungsgemäß wird vorgeschlagen, dass der Schichtkörper zumindest eine Haftvermittlungsschicht umfasst, die zumindest teilweise zwischen dem Grundkörper und der Reinigungsschicht angeordnet ist und dazu vorgesehen ist, eine Haftung zwischen der Reinigungsschicht und dem Grundkörper zu vermitteln. Unter einem "Schichtkörper" soll insbesondere ein Körper verstanden werden, welcher wenigstens einen Grundkörper bzw. eine Grundschicht und wenigstens eine auf dem Grundkörper aufgebrachte weitere Schicht, auf welcher insbesondere wiederum eine oder mehrere Schichten aufgebracht sein können, umfasst. Unter einer "Schicht" soll im Besonderen eine in flächenhafter Ausdehnung über, unter oder zwischen einem anderen Körper liegende einheitliche Masse verstanden werden. Unter einer "Haftvermittlungsschicht" soll erfindungsgemäß eine Schicht verstanden werden, welche wenigstens zwei Seiten aufweist und zumindest Teile wenigstens zweier der Seiten an wenigstens zwei anderen Körpern und/oder Schichten anhaften, wobei die Haftvermittlungsschicht insbesondere dazu vorgesehen ist, eine gegenüber einer direkten Kopplung zwischen dem Grundkörper und der Reinigungsschicht erhöhte Haftung der Reinigungsschicht zu ermöglichen. Unter einer "Reinigungsschicht" soll erfindungsgemäß eine Schicht verstanden werden, welche in wenigstens einem Betriebsmodus eine Reinigungsfunktion unterstützt, insbesondere in einer verbesserten Weise gegenüber dem Grundkörper selbst. Die Reinigungsschicht, die Haftvermittlungsschicht und der Grundkörper sollen insbesondere paarweise verschiedenartige Materialien aufweisen. Erfindungsgemäß weist der Grundkörper Borofloatglas auf. Erfindungsgemäß soll unter "Borofloat" ein Herstellungsverfahren für Flachglas verstanden werden, dessen chemische Hauptkomponenten SiO₂ und B₂O₃ sind. Unter "Flachglas" soll im Besonderen ein scheibenförmiges Glas verstanden werden. Mit einer erfindungsgemäßen Ausgestaltung können besonders vorteilhafte Reinigungsschichten sicher an dem Grundkörper befestigt und eine Reinigungswirkung des Schichtkörpers verbessert werden.

Ferner wird vorgeschlagen, dass die Reinigungsschicht mit Hilfe eines Schmelzvorgangs an der Haftvermittlungsschicht angebracht ist. Unter einem "Schmelzvorgang" soll insbesondere ein Vorgang verstanden werden, bei welchem ein Schmelzen wenigstens eines Körpers und/oder wenigstens einer Schicht stattfindet. Hiermit kann eine gute Haftung zwischen zwei Schichten erreicht werden.

In einer bevorzugten Ausgestaltung der Erfindung weist die Haftvermittlungsschicht eine Erweichungstemperatur und/oder einen Transformationsbereich auf, welche/welcher unterhalb einer Erweichungstemperatur und/oder eines Transformationsbereichs des Grundkörpers liegen/liegt. Unter einer "Erweichungstemperatur" eines Stoffes und/oder eines Körpers soll im Besonderen eine Temperatur verstanden werden, bei welcher der Stoff und/oder der Körper die größte Änderung seiner Verformungsfähigkeit aufweist. Unter einem "Transformationsbereich" soll insbesondere ein Temperaturbereich verstanden werden, in dem sich das mechanische Verhalten eines Stoffes und/oder eines Körpers wesentlich ändert, und besonders vorteilhaft soll darunter ein Übergangstemperaturbereich zwischen Schmelze und Feststoff verstanden werden. Mit einer erfindungsgemäßen Ausgestaltung kann eine einfache Herstellung des Schichtkörpers erreicht werden.

Mit Vorteil liegt/liegen die Erweichungstemperatur und/oder eine Schmelztemperatur der Haftvermittlungsschicht bei ca. 500 °C. Eine "Schmelztemperatur" ist im Besonderen eine Temperatur, bei welcher ein Körper und/oder Stoff von einem festen in einen flüssigen Aggregatzustand übergeht. Unter "ca. 500 °C" soll insbesondere ein Temperaturbereich von 470 °C bis 530 °C, ein Temperaturbereich von 485 °C bis 515 °C und besonders vorteilhaft ein Temperaturbereich von 495 °C bis 505 °C verstanden werden. Hiermit kann ein hitzeempfindlicher Grundkörper zur Herstellung des Schichtkörpers verwendet werden.

Weiterhin wird vorgeschlagen, dass die Haftvermittlungsschicht einen thermischen Ausdehnungskoeffizienten aufweist, welcher im Wesentlichen gleich einem thermischen Ausdehnungskoeffizienten des Grundkörpers ist. Unter einem "im Wesentlichen gleichen" thermischen Ausdehnungskoeffizienten soll insbesondere ein bis zu 10 Prozent, oder ein bis zu 5 Prozent und besonders vorteilhaft ein bis zu 3 Prozent abweichender thermischer Ausdehnungskoeffizient verstanden werden. Damit wird eine größere Hitzebeständigkeit des Schichtkörpers erreicht.

In einer vorteilhaften Ausgestaltungsform der Erfindung beträgt der thermische Ausdehnungskoeffizient der Haftvermittlungsschicht ca. 3,25x10⁻⁶/K. Damit kann insbesondere ein Grundkörper mit einer besonders hohen visuellen Qualität verwendet werden.

Erfindungsgemäß wird vorgeschlagen, dass die Haftvermittlungsschicht als Glasfritte ausgebildet ist. Alternativ oder zusätzlich ist denkbar, dass die Haftvermittlungsschicht als silikatischer Binder ausgebildet ist (nicht erfindungsgemäß). Unter einer "Glasfritte" soll insbesondere ein Zwischenprodukt bei der Herstellung von Glasschmelzen verstanden werden. Unter "silikatisch" soll im Besonderen in der Art eines Silikats verstanden werden. Unter einem "Binder" soll insbesondere ein Bindemittel verstanden werden. Unter einem "Bindemittel" soll insbesondere ein Stoff verstanden werden, durch welchen Feststoffe miteinander bzw. auf einer Unterlage befestigt und/oder verklebt werden. Ein "silikatischer Binder" kann insbesondere wenigstens ein Silikat aufweisen und/oder dazu vorgesehen sein, zumindest ein Silikat zu binden. Insbesondere kann der Binder durch einen Sol-Gel-Prozess hergestellt sein. Unter einem "Sol-Gel-Prozess" soll insbesondere ein Verfahren zur Synthese von Gelen auf Basis eines Sols verstanden werden. Mit einer erfindungsgemäßen Ausgestaltung kann insbesondere eine kostengünstige Herstellung einer Haftvermittlungsschicht erreicht werden.

In einer erfindungsgemäßen Ausgestaltung der Erfindung ist die Reinigungsschicht als eine eine katalytische Reinigung unterstützende Schicht ausgebildet. Unter einer "katalytischen" Reinigung soll insbesondere eine Reinigung verstanden werden, welche aufgrund einer Beschleunigung und/oder einem Ermöglichen einer chemischen Reaktion, insbesondere im Vergleich zu einer entsprechenden Reaktion auf dem Grundkörper, stattfindet. Hiermit kann eine besonders gründliche Reinigung, insbesondere der Reinigungsschicht, erreicht werden.

Weiterhin wird vorgeschlagen, dass der Grundkörper, die Haftvermittlungsschicht und die Reinigungsschicht jeweils einzeln und alle zusammengenommen transparent sind. Darunter, dass ein Körper und insbesondere eine Schicht "transparent" ist, soll insbesondere verstanden werden, dass es in einem für Menschen sichtbaren Wellenlängenbereich wenigstens einen Wellenlängenbereich gibt, für welchen der Transmissionsgrad des Körpers bzw. der Schicht größer ist als 0,1, insbesondere größer ist als 0,3 und besonders vorteilhaft größer ist als 0,5, und insbesondere soll darunter, dass ein Körper und insbesondere eine Schicht "transparent" ist, verstanden werden, dass hinter dem Körper bzw. der Schicht liegende Strukturen, welche mit Tageslicht beleuchtet werden und in dieser Situation ohne den dazwischen liegenden Körper bzw. die dazwischen liegende Schicht von Menschen erkennbar sind, von Menschen in derselben Situation, in welcher sich aber der Körper bzw. die Schicht zwischen den Strukturen und dem Menschen befindet, erkennbar sind. Mit einer erfindungsgemäßen Ausgestaltung kann eine komfortable visuelle Überwachung eines Backvorgangs ermöglicht werden.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Hausgerät mit einem Schichtkörper und
- Fig. 2: einen Schnitt durch den Schichtkörper.

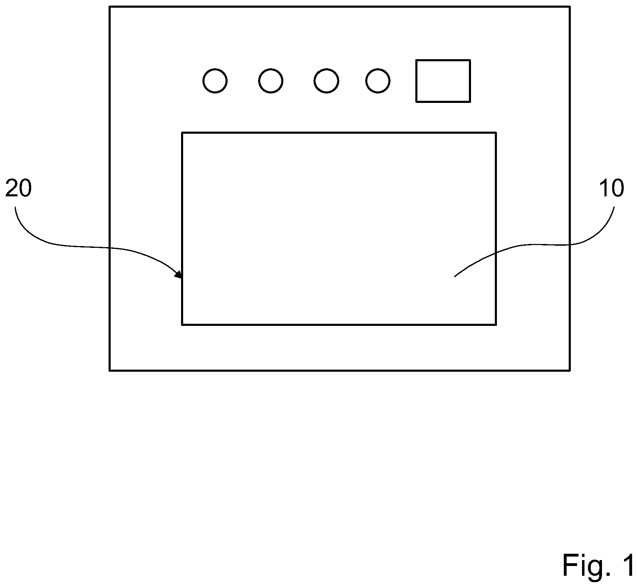

Figur 1 zeigt ein erfindungsgemäß als Backofen ausgebildetes Hausgerät mit einem Sichtfenster 20. Das Sichtfenster 20 weist erfindungsgemäß einen Schichtkörper 10 auf, welcher transparent ist und einen Einblick in einen Innenraum des Hausgeräts erlaubt. Der Innenraum ist in einer Richtung 22 senkrecht zu dem Sichtfenster 20 hinter dem Sichtfenster 20 angeordnet.

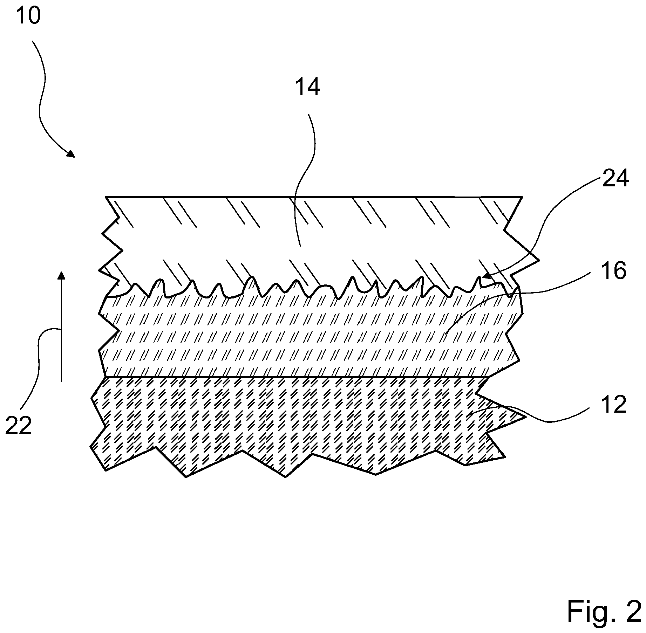

Figur 2 zeigt einen Schnitt durch den Schichtkörper 10. Der Schichtkörper 10 weist eine Reinigungsschicht 14, eine Haftvermittlungsschicht 16 und einen Grundkörper 12 auf. Die Haftvermittlungsschicht 16 ist zwischen dem Grundkörper 12 und der Reinigungsschicht 14 angeordnet. Die Reinigungsschicht 14 bedeckt die Haftvermittlungsschicht 16 in einer der Richtung 22 entgegengesetzten Richtung derart, dass in einem Betriebsmodus des Backofens die Reinigungsschicht 14 aber nicht die Haftvermittlungsschicht 16 unmittelbar an den Innenraum des Backofens angrenzt. Die Reinigungsschicht 14 haftet an der Haftvermittlungsschicht 16. Die Haftvermittlungsschicht 16 haftet wiederum an dem Grundkörper 12 an. Die Haftvermittlungsschicht 16 bedeckt den Grundkörper 12 in einer der Richtung 22 entgegengesetzten Richtung. Die Haftvermittlungsschicht 16 und die Reinigungsschicht 14 durchdringen sich erfindungsgemäß in einem Durchdringungsteil 24 der beiden Schichten, welcher ein Fünftel der Dicke der Reinigungsschicht 14 aufweist.

Das Anhaften der Reinigungsschicht 14 an der Haftvermittlungsschicht 16 wird durch ein Schmelzverfahren erreicht, bei welchem die Haftvermittlungsschicht 16 geschmolzen und die Poren aufweisende Reinigungsschicht 14 nachfolgend in die Haftvermittlungsschicht 16 eingesenkt wird. Der Grundkörper 12 bleibt dabei unversehrt, da die Erweichungstemperatur und der Transformationsbereich der Haftvermittlungsschicht 16 unter der Erweichungstemperatur und dem Transformationsbereich des Grundkörpers liegen. Die Erweichungstemperatur und die Schmelztemperatur der Haftvermittlungsschicht liegen bei ca. 500 °C. Die Haftvermittlungsschicht 16 ist dabei ausreichend voluminös und ausreichend dick, um eine Haftreaktion zu der Reinigungsschicht 14 sicher zu ermöglichen. Der Grundkörper 12 ist aus Borofloatglas gebildet. Die Haftvermittlungsschicht 16 besteht aus einer Glasfritte. Die Reinigungsschicht 14 ist als eine eine katalytische Reinigung unterstützende Ecolyse-Schicht ausgebildet. Der Grundkörper 12, die Haftvermittlungsschicht 16 und die Reinigungsschicht 14 sind jeweils transparent.

Bei einer Selbstreinigung eines Backofens wird der Innenraum des Backofens für mindestens eine Stunde auf 480 °C aufgeheizt. Dabei wird ein Großteil der organischen Bestandteile von Lebensmittelverschmutzungen verascht, so dass die Rückstände leicht ausgewischt werden können. Auf der Reinigungsschicht 14 reicht dabei die vorherrschende Temperatur nicht aus, damit eine Pyrolyse von an der Reinigungsschicht 14 anhaftenden Lebensmittelverschmutzungen stattfindet. Diese Lebensmittelverschmutzungen werden bei der Selbstreinigung durch eine Wirkung der Reinigungsschicht 14 aufgrund von Katalyse zersetzt und können deshalb leicht entfernt werden. Bei einer Erhitzung des Innenraums des Backofens nimmt der Schichtkörper 10 keinen Schaden, da der thermische Ausdehnungskoeffizient der Haftvermittlungsschicht 16 im Wesentlichen gleich dem thermischen Ausdehnungskoeffizienten des Grundkörpers 12 ist und somit ein Ablösen der Haftvermittlungsschicht 16 von dem Grundkörper 12 verhindert wird. Der thermische Ausdehnungskoeffizient der Haftvermittlungsschicht 16 beträgt ca. 3,25x10⁻⁶/K.

In nicht erfindungsgemäßen Ausführungsbeispielen des Schichtkörpers 10 besteht die Haftvermittlungsschicht 16 aus einem silikatischen Binder. In solchen Ausführungsbeispielen wird das Anhaften der Reinigungsschicht 14 an die Haftvermittlungsschicht 16 mit Hilfe von Bindungen an Silanolgruppen oder von Bindungen an Siloxangruppen oder von Bindungen an Silanolgruppen und Siloxangruppen erreicht.

### Bezugszeichen

- 10: Schichtkörper
- 12: Grundkörper
- 14: Reinigungsschicht
- 16: Haftvermittlungsschicht
- 20: Sichtfenster
- 22: Richtung
- 24: Durchdringungsteil

## Patentansprüche

1. Backofen, der eine pyrolytische Reinigungsfunktion aufweist, mit einem Sichtfenster (20), das einen Schichtkörper aufweist, welcher einen Grundkörper (12), der ein Flachglas, dessen chemische Hauptkomponenten SiO₂ und B₂O₃ sind, aufweist, und eine Reinigungsschicht (14) zur Unterstützung der Reinigungsfunktion in wenigstens einem Betriebsmodus und zumindest eine Haftvermittlungsschicht (16) aufweist, die zumindest teilweise zwischen dem Grundkörper (12) und der Reinigungsschicht (14) angeordnet ist und dazu vorgesehen ist, eine Haftung zwischen der Reinigungsschicht (14) und dem Grundkörper (12) zu vermitteln, und die wenigstens zwei Seiten aufweist, wobei zumindest Teile wenigstens zweier der Seiten an wenigstens zwei anderen Körpern und/oder Schichten anhaften, wobei die Haftvermittlungsschicht (16) als Glasfritte ausgebildet ist, wobei die Reinigungsschicht (14) als eine eine katalytische Reinigung unterstützende Schicht ausgebildet ist, **dadurch gekennzeichnet, dass** die Haftvermittlungsschicht (16) und die Reinigungsschicht (14) sich in einem Durchdringungsteil (24) der beiden Schichten durchdringen, welcher ein Fünftel der Dicke der Reinigungsschicht (14) aufweist.

2. Backofen nach Anspruch 1,
**dadurch gekennzeichnet, dass**
die Reinigungsschicht (14) mit Hilfe eines Schmelzvorgangs an der Haftvermittlungsschicht (16) angebracht ist.

3. Backofen nach Anspruch 1 oder 2,
**dadurch gekennzeichnet, dass**
die Haftvermittlungsschicht (16) eine Erweichungstemperatur und/oder einen Transformationsbereich aufweist, welche/welcher unterhalb einer Erweichungstemperatur und/oder eines Transformationsbereichs des Grundkörpers (12) liegen/liegt.

4. Backofen nach Anspruch 3,
**dadurch gekennzeichnet, dass**
die Erweichungstemperatur und/oder eine Schmelztemperatur der Haftvermittlungsschicht (16) bei ca. 500 °C liegen/liegt.

5. Backofen nach einem der vorherigen Ansprüche,
**dadurch gekennzeichnet, dass**
die Haftvermittlungsschicht (16) einen thermischen Ausdehnungskoeffizienten aufweist, welcher im Wesentlichen gleich einem thermischen Ausdehnungskoeffizienten des Grundkörpers (12) ist.

6. Backofen nach Anspruch 5,
**dadurch gekennzeichnet, dass**
der thermische Ausdehnungskoeffizient der Haftvermittlungsschicht (16) ca. 3,25x10⁻⁶/K beträgt.

7. Backofen nach einem der vorherigen Ansprüche,
**dadurch gekennzeichnet, dass**
der Grundkörper (12), die Haftvermittlungsschicht (16) und die Reinigungsschicht (14) jeweils einzeln und alle zusammengenommen transparent sind.

## Claims

1. Oven, which has a pyrolytic cleaning function, with a viewing window (20) which has a layer body, which has a base body (12) which has flat glass whose primary chemical components are SiO₂ and B₂O₃, and a cleaning layer (14) for supporting the cleaning function in at least one operating mode and at least one adhesion-promoting layer (16), which is arranged at least partially between the base body (12) and the cleaning layer (14) and is provided to promote adhesion between the cleaning layer (14) and the base body (12), and which has at least two sides, wherein at least parts of at least two of the sides adhere to at least two other bodies and/or layers, wherein the adhesion-promoting layer (14) is embodied as a layer supporting a catalytic cleaning, **characterised in that** the adhesion-promoting layer (16) and the cleaning layer (14) penetrate into a penetration part (24) of the two layers, which has a fifth of the thickness of the cleaning layer (14).

2. Oven according to claim 1,
**characterised in that**
the cleaning layer (14) is attached to the adhesion-promoting layer (16) with the aid of a melting procedure.

3. Oven according to claim 1 or 2,
**characterised in that**
the adhesion-promoting layer (16) has a softening temperature and/or a transformation range which lies/lie below a softening temperature and/or a transformation range of the base body (12).

4. Oven according to claim 3,
**characterised in that**
the softening temperature and/or a melting temperature of the adhesion-promoting layer (16) lies at approx. 500 °C.

5. Oven according to one of the preceding claims,
**characterised in that**
the adhesion-promoting layer (16) has a thermal coefficient of expansion which is substantially equal to a thermal coefficient of expansion of the base body (12).

6. Oven according to claim 5,
**characterised in that**
the thermal coefficient of expansion of the adhesion-promoting layer (16) amounts to approx. 3 .25x10⁻⁶/K.

7. Oven according to one of the preceding claims,
**characterised in that**
the base body (12), the adhesion-promoting layer (16) and the cleaning layer (14) are each transparent individually and when brought together.

## Revendications

1. Four de cuisson qui possède une fonction de nettoyage pyrolytique, comprenant une vitre de visualisation (20) dotée d'un corps stratifié qui comprend un corps de base (12) comprenant un verre plat, dont les constituants chimiques principaux sont du SiO₂ et du B₂O₃, et une couche de nettoyage (14) assurant la fonction de nettoyage dans au moins un mode de fonctionnement et au moins une couche d'adhésion (16) disposée au moins en partie entre le corps de base (12) et la couche de nettoyage (14) et conçue pour engendrer une adhésion entre la couche de nettoyage (14) et le corps de base (12), et qui comprend au moins deux côtés, dans lequel au moins des parties au moins de deux des côtés adhèrent à au moins deux autres corps et/ou couches, dans lequel la couche d'adhésion (16) est configurée sous forme d'une fritte de verre, et dans lequel la couche de nettoyage (14) est conçue sous forme d'une couche assurant un nettoyage catalytique,
**caractérisé en ce que** la couche d'adhésion (16) et la couche de nettoyage (14) s'entremêlent dans une partie d'imprégnation (24) des deux couches, qui comprend un cinquième de l'épaisseur de la couche de nettoyage (14).

2. Four de cuisson selon la revendication 1, **caractérisé en ce que** la couche de nettoyage (14) est appliquée sur la couche d'adhésion (16) au moyen d'un processus de fusion.

3. Four de cuisson selon la revendication 1 ou 2, **caractérisé en ce que** la couche d'adhésion (16) a une température de ramollissement et/ou une plage de transformation qui est (sont) inférieure(s) à une température de ramollissement et/ou une plage de transformation du corps de base (12).

4. Four de cuisson selon la revendication 3, **caractérisé en ce que** la température de ramollissement et/ou une température de fusion de la couche d'adhésion (16) sont/ est d'env. 500 °C.

5. Four de cuisson selon l'une des revendications précédentes, **caractérisé en ce que** la couche d'adhésion (16) possède un coefficient de dilatation thermique qui est essentiellement égal à un coefficient de dilatation thermique du corps de base (12).

6. Four de cuisson selon la revendication 5, **caractérisé en ce que** le coefficient de dilatation thermique de la couche d'adhésion (16) est d'environ 3,25 x 10⁻⁶/K.

7. Four de cuisson selon l'une des revendications précédentes, **caractérisé en ce que** le corps de base (12), la couche d'adhésion (16) et la couche de nettoyage (14) sont transparents chacun individuellement et considérés dans leur ensemble.
